## Europäisches Patentamt

## European Patent Office

## Office européen des brevets

(19)

(11) Veröffentlichungsnummer: **0 267 538**
**B1**

(12) # EUROPÄISCHE PATENTSCHRIFT

(45) Veröffentlichungstag der Patentschrift:
26.09.90

(51) Int. Cl.⁵: **G11B 17/30**

(21) Anmeldenummer: 87116307.7

(22) Anmeldetag: 05.11.87

(54) **Plattenspieler mit Magazin.**

(30) Priorität: 14.11.86 DE 3638910

(43) Veröffentlichungstag der Anmeldung:
18.05.88 Patentblatt 88/20

(45) Bekanntmachung des Hinweises auf die Patenterteilung:
26.09.90 Patentblatt 90/39

(84) Benannte Vertragsstaaten:
AT BE CH DE ES FR GB IT LI LU NL SE

(56) Entgegenhaltungen:
BE-A- 901 937

PATENT ABSTRACTS OF JAPAN, Band 10,
Nr. 225 (P-484)[2281], 6. August 1986; &
JP-A-61 59 660 (HITACHI LTD) 27-03-1986
PATENT ABSTRACTS OF JAPAN, Band 10,
Nr. 274 (P-498)[2330], 18. September 1986; &
JP-A-61 96 566 (MATSUSHITA ELECTRIC IND CO
LTD) 15-05-1986
PATENT ABSTRACTS OF JAPAN, Band 9,
Nr. 37 (P-335)[1760], 16. Februar 1985; &
JP-A-59 177 759 (TEAC K.K.) 08-10-1984

(73) Patentinhaber: Deutsche Thomson-Brandt GmbH,
Hermann-Schwer-Strasse 3 Postfach 1307,
D-7730 Villingen-Schwenningen(DE)

(72) Erfinder: Laufer, Helmut, Eichendorffweg 12, D-7742 St.
Georgen(DE)

# Beschreibung

Die Erfindung betrifft einen Plattenspieler mit einem Magazin aus mehreren Fächern zur Aufnahme plattenförmiger Aufzeichnungsträger und mit einem Laufwerk, wobei das Magazin und das Laufwerk zur Positionierung des zu entnehmenden plattenförmigen Aufzeichnungsträgers in die Entnahmestellung relativ zueinander verschiebbar sind.

CD-Spieler, Videoplattenspieler oder Computer, die mit Videoplatten als Speichermedium arbeiten, sind z.B. als derartige Plattenspieler mit Magazin zur Aufnahme mehrerer Platten ausgeführt.

In der belgischen Patentanmeldung BE-901.937 ist ein CD-Spieler mit einem Magazin beschrieben, bei dem in jedem Fach des Magazins ein Hebelgestänge und eine von einem Elektromotor angetriebene Rolle vorgesehen sind, um eine CD-Platte aus dem Fach zu entnehmen. Dabei greift die Rolle am Umfang der CD-Platte an, um sie aus dem Fach herauszurollen.

Diese Anordnung ist nicht nur für sich allein gesehen bereits relativ aufwendig. Weil zudem in jedem Fach des Magazins eine derartige aufwendige Anordnung aus Hebelgestänge, Rolle und Motor vorgesehen ist, erhöht sich der gesamte Aufwand des CD-Spielers beträchtlich. Außerdem ist diese aufwendige Anordnung weitaus störanfälliger als ein einfacher Mechanismus.

Es ist daher Aufgabe der Erfindung, einen Plattenspieler mit Magazin zur Aufnahme mehrerer plattenförmiger Aufzeichnungsträger derart zu gestalten, daß die plattenförmigen Aufzeichnungsträger mittels eines einfachen wenig störanfälligen Mechanismus aus dem Magazin entnehmbar sind.

Die Erfindung löst diese Aufgabe dadurch, daß die plattenförmigen Aufzeichnungsträger mittels eines Stößels, für den in der Rückwand eines jeden Fachs eine Öffnung vorgesehen ist, aus dem Fach schiebbar sind.

Es zeigen

Figur 1 ein erstes Ausführungsbeispiel der Erfindung mit im Magazin liegender CD-Platte in Draufsicht

Figur 2 das erste Ausführungsbeispiel mit auf dem Plattenantrieb liegender CD-Platte in Draufsicht

Figur 3 ein zweites Ausführungsbeispiel der Erfindung mit im Magazin liegender CD-Platte in Draufsicht

Figur 4 das zweite Ausführungsbeispiel mit auf dem Plattenantrieb liegender CD-Platte in Draufsicht

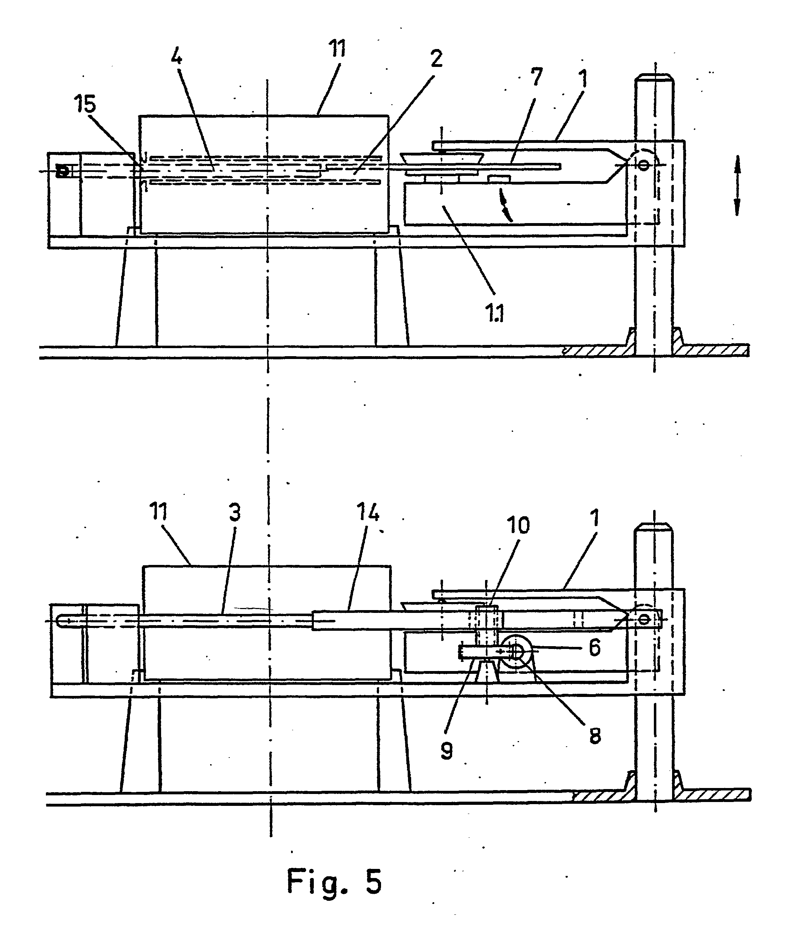

Figur 5 das erste Ausführungsbeispiel in Seitenansicht.

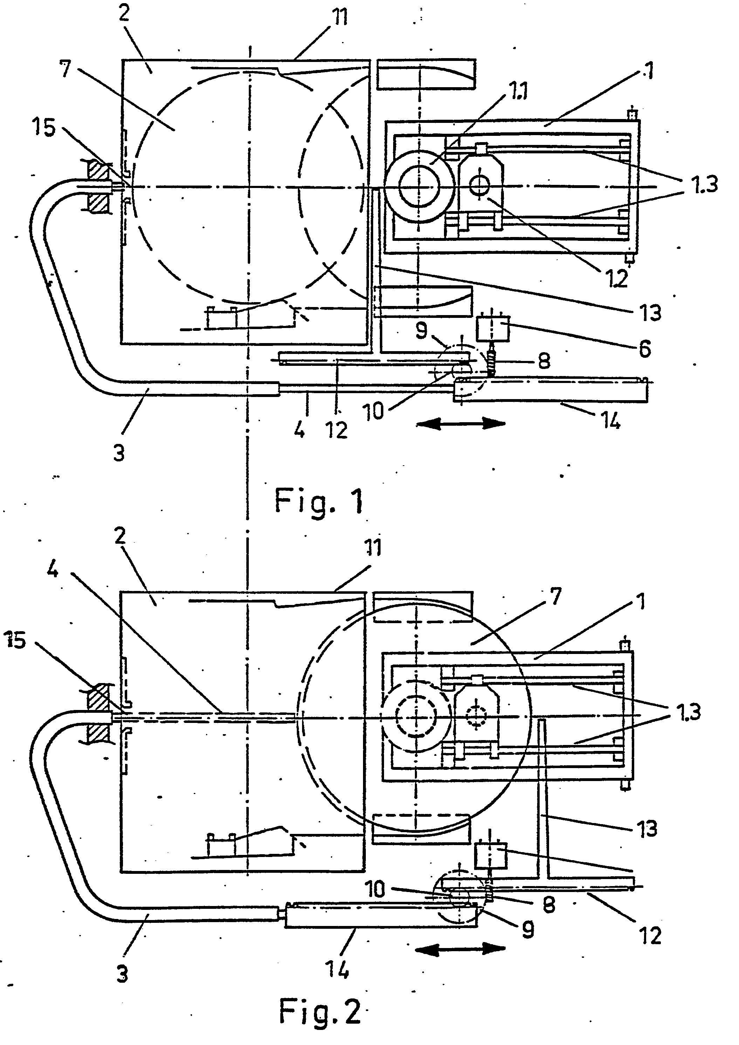

Anhand der Figuren 1 und 2 wird die Erfindung nun beschrieben und anschließend erläutert.

In Figur 1 liegt eine CD-Platte 7 in einem Fach 2 des Magazins 11. An der Frontseite des Magazins 11 steht ein Laufwerk 1, das aus einem Plattenantrieb 1.1, einem optischen Abtastsystem 1.2 und einem Radialantrieb 1.3 für das optische Abtastsystem 1.2 aufgebaut ist. Mechanisch verbunden mit dem Laufwerk 1, das auf die Höhe eines jeden Fachs 2 des Magazins 11 fahrbar ist, ist ein Antrieb, bestehend aus einem Elektromotor 6, einer Schnecke 8, einem Schneckenrad 9 und einem auf gleicher Welle sitzenden Zahnrad 10. Auf der dem Magazin 11 zugewandten Seite des Zahnrads 10 sitzt eine Zahnstange 12 mit einem rechtwinkligen Hebelarm 13, der an der Frontseite des Magazins 11 anliegt. Auf der dem Magazin abgewandten Seite des Zahnrads 10 sitzt eine Zahnstange 14, an deren zur Rückwand des Magazins 11 zeigendem Ende ein biegsamer Stößel 4 befestigt ist. Der biegsame Stößel 4 wird mittels eines Führungsrohres 3 parallel zur Seite des Magazins 11 geführt und zur Rückwand umgelenkt. In der Mitte der Rückwand des Magazins 11 wird der biegsame Stößel 4 derart umgelenkt, daß er senkrecht auf die Rückwand des Magazins 11 zeigt. In der Mitte der Rückwand eines jeden Fachs 2 des Magazins 11 ist jeweils an der Stelle, auf die der biegsame Stößel zeigt, eine Öffnung 15 zum Druchführen des biegsamen Stößels 4 vorgesehen.

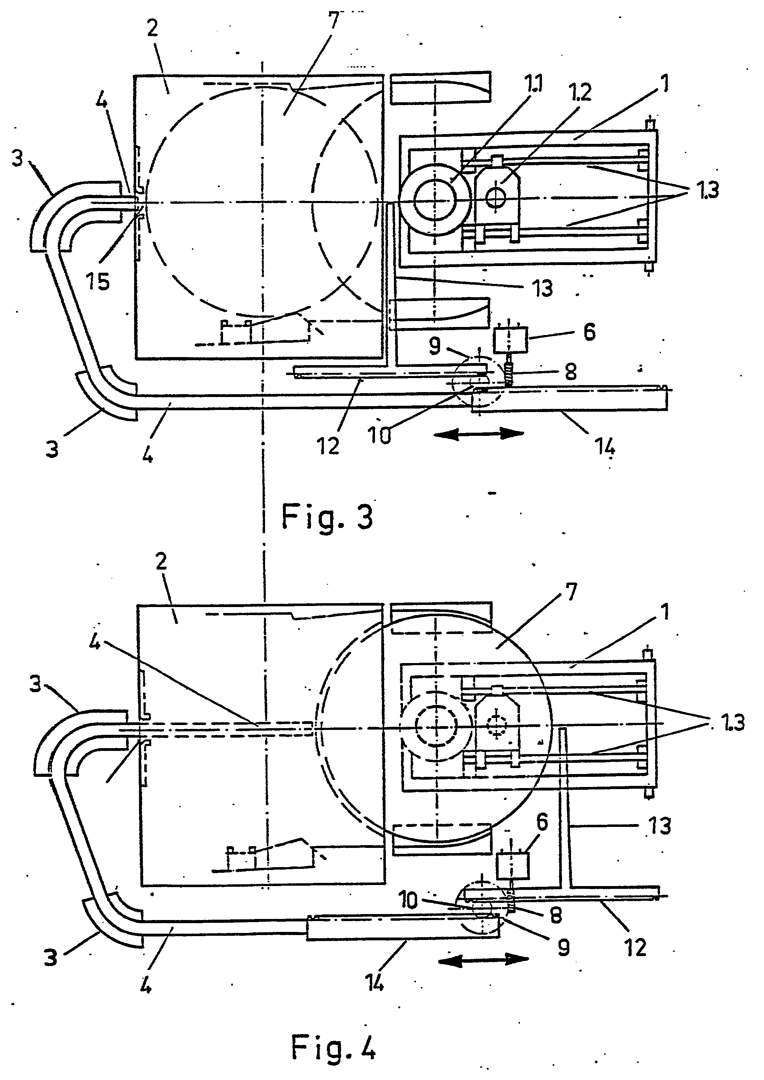

Beim ersten Ausführungsbeispiel, gezeigt in Figur 1 und 2, ist der biegsame Stößel 4 als Bowdenzug - wie z.B. beim Drahtauslöser für einen Photoapparat - ausgeführt, während er beim zweiten Ausführungsbeispiel, abgebildet in den Figuren 3 und 4, als biegsame Welle wie z.B. bei ferngesteuerten Spielzeugautos gestaltet ist. Beim zweiten Ausführungsbeispiel genügt es deshalb, nur an den Biegestellen Führungsrohre 3 vorzusehen. Weitere Unterschiede bestehen zwischen dem ersten und dem zweiten Ausführungsbeispiel nicht.

Es wird nun anhand der Figuren erläutert, wie der erfindungsgemäße CD-Spieler die CD-Platten aus dem Magazin holt und wieder hineinschiebt.

Wenn eine CD-Platte 7 zum Spielen ausgesucht worden ist, fährt zunächst das Laufwerk 1 und infolge der mechanischen Verbindung auch der Mechanismus aus den Zahnstangen 12 und 14, dem Elektromotor 6, der Schnecke 8, dem Schneckenrad 9, dem Zahnrad 10, dem biegsamen Stößel 4 samt Führungsrohr 3 auf die Höhe desjenigen Fachs 2, in dem die gewünschte CD-Platte 7 liegt.

Der Elektromotor 6 treibt nun das Zahnrad 10 über das Schneckengetriebe aus der Schnecke 8 und dem Schneckenrad 9 rechts herum an. Durch die Rechtsdrehungen des Zahnrads 10 wird die Zahnstange 14 nach links geschoben, so daß der biegsame Stößel 4 durch die Öffnung 15 in das Fach 2 geschoben wird und dadurch die CD-Platte 7 aus dem Fach 2 herausschiebt. Gleichzeitig wird durch die Rechtsdrehungen des Zahnrads 10 die Zahnstange 12 mit dem rechtwinkligen Hebelarm 13 um die gleich Wegstrecke nach rechts weg von der Frontplatte des Magazins 11 bewegt, so daß der Weg für die CD-Platte 7 freigegeben ist. Sie kann deshalb über den Plattenantrieb 1.1 geschoben werden und einrasten.

Wenn die CD-Platte 7 z.B. nach dem Abspielen wieder in das Fach 2 zurückgeschoben werden soll, dreht der Elektromotor 6 nach Freigabe der CD-Platte 7 vom Plattenantrieb 1.1 das Zahnrad 10 links herum. Dadurch schiebt die Zahnstange 12 mit dem Hebelarm 13 die CD-Platte 7 wieder in das Fach 2 zurück bis der Hebelarm 13 an der Frontplatte wieder anliegt, während gleichzeitig die Zahnstange 14 um die gleiche Wegstrecke in die entgegengesetzte Richtung bewegt wird. Dadurch wird der biegsame Stößel 4 wieder aus dem Fach 2 durch die Öffnung 15 herausgezogen, so daß die CD-Platte 7 während des Einschiebens auf keinen Widerstand im Fach 2 stößt.

Verglichen mit dem eingangs beschriebenen CD-Spieler ist der Aufwand bei der Erfindung sehr gering. Anstatt ein Hebelgestänge, eine Rolle und einen Elektromotor für jedes Fach des Magazins vorzusehen, genügt bei der Erfindung eine Öffnung in der Rückwand eines jeden Fachs. Der gesamte mechanische Aufwand ist bei der Erfindung auf zwei Zahnstangen, ein Zahnrad, ein Schneckengetriebe, einen Elektromotor und einen biegsamen Stößel mit Führungsrohr, z.B. eine biegsame Welle, beschränkt. Wegen seiner Einfachheit arbeitet dieser Mechanismus leiser und ist außerdem weit weniger störanfällig als der aufwendige Mechanismus aus der eingangs erwähnten belgischen Patentanmeldung.

Die Erfindung ist jedoch keineswegs auf CD-Spieler beschränkt. Sie ist für alle Geräte geeignet, die von einem plattenförmigen Aufzeichnungsträger Informationen, sei es durch Berührung oder berührungslos, auslesen, und bei denen mehrere plattenförmige Aufzeichnungsträger in einem Magazin stapelbar sind. Das können z.B. CD-Spieler, Videoplattenspieler oder Computer sein, die mit plattenförmigen Aufzeichnungsträgern als Speichermedium arbeiten. Jedoch ist der erfindungsgemäße Plattenspieler besonders gut für die Ausführung als CD-Spieler geeignet, zumal er wenig Raum in Anspruch nimmt und gegen Erschütterungen relativ unempfindlich ist.

## Patentansprüche

1. Plattenspieler mit einem Magazin (11) aus mehreren Fächern (2) zur Aufnahme plattenförmiger Aufzeichnungsträger (7) und mit einem Laufwerk (1), wobei das Magazin und das Laufwerk zur Positionierung des zu entnehmenden plattenförmigen Aufzeichnungsträgers (7) in die Entnahmestellung relativ zueinander verschiebbar sind, **dadurch gekennzeichnet** daß die plattenförmigen Aufzeichnungsträger (7) mittels eines Stößels (4), für den in der Rückwand eines jeden Fachs (2) des Magazins (11) eine Öffnung (15) vorgesehen ist, aus dem Fach (2) schiebbar sind.

2. Plattenspieler nach Anspruch 1, **dadurch gekennzeichnet**, daß der Stößel (4) aus biegsamem Material gefertigt ist, daß der biegsame Stößel (4) von der Rückwand des Magazins (11) entlang einer Seite des Magazins (11) nach vorn zu einem Antrieb (6, 8, 9, 10) geführt ist, daß zur Entnahme eines plattenförmigen Aufzeichnungsträgers (7) aus dem Magazin (11) der biegsame Stößel (4) mittels des Antriebs (6, 8, 9, 10) durch die Öffnung (15) in das Fach (2) geschoben und dadurch der plattenförmige Aufzeichnungsträger (7) aus dem Fach (2) geschoben wird.

3. Plattenspieler nach Anspruch 2, **dadurch gekennzeichnet**, daß der biegsame Stößel (4), der Antrieb (6, 8, 9, 10) und das Laufwerk (1) eine mechanische Einheit bilden, die relativ zum Magazin verschiebbar ist.

4. Plattenspieler nach Anspruch 2 oder 3, **dadurch gekennzeichnet**, daß der biegsame Stößel (4) zumindest an den Biegungen in einem Führungsrohr (3) geführt ist.

5. Plattenspieler nach Anspruch 2, 3 oder 4, **dadurch gekennzeichnet**, daß der biegsame Stößel (4) senkrecht in die Öffnung (15) an der Rückwand des Magazins (11) eintritt.

6. Plattenspieler nach Anspruch 2, 3, 4 oder 5, **dadurch gekennzeichnet**, daß die Öffnung (15) für den biegsamen Stößel (4) in der Mitte der Rückwand eines jeden Fachs (2) liegt.

7. Plattenspieler nach Anspruch 2, 3, 4, 5 oder 6, **dadurch gekennzeichnet**, daß das nicht in die Öffnung (15) einführbare Ende des biegsamen Stößels (4) mit einer Zahnstange (14) versehen ist, in die ein Zahnrad (10) eingreift.

8. Plattenspieler nach Anspruch 1, 2, 3, 4, 5, 6 oder 7, **dadurch gekennzeichnet**, daß eine Zahnstange (12) mit einem rechtwinkligen Hebelarm (13), der parallel zur Frontseite des Magazins (11) verläuft, vorgesehen ist, in die ein Zahnrad (10) eingreift, und daß ein dem Magazin (11) zum Abspielen entnommener plattenförmiger Aufzeichnungsträger (7) mittels des Hebelarms (13) in das Magazin (11) zurückschiebbar ist.

9. Plattenspieler nach Anspruch 8, **dadurch gekennzeichnet**, daß die Zahnstange (12) mit dem rechtwinkligen Hebelarm (13) und das Laufwerk (11) eine mechanische Einheit bilden.

10. Plattenspieler nach Anspruch 3 und 9, **dadurch gekennzeichnet**, daß die Zahnstange (12) mit dem rechtwinkligen Hebelarm (13) auf der der Zahnstange (14) des biegsamen Stößels (4) gegenüberliegenden Seite des Zahnrads (10) in dieses Zahnrad (10) eingreift, daß der biegsame Stößel (4) und die Zahnstange (12) mit dem rechtwinkligen Hebelarm (13) derart zusammenwirken, daß zum Herausschieben eines plattenförmigen Aufzeichnungsträgers (7) aus dem Fach (2) durch Drehen des Zahnrads (10) in die eine Richtung der biegsame Stößel (4) in das Fach (2) durch die Öffnung (15) geschoben wird, während gleichzeitig der rechtwinklige Hebelarm (13) von der Frontseite des Magazins (11) um die gleiche Wegstrecke wegbewegt wird, daß zum Einschieben eines plattenförmigen Aufzeichnungsträgers (7) in das Fach (2) durch Drehen des Zahnrads (10) in die andere Richtung der rechtwinklige Hebelarm (13) den plattenförmigen Aufzeichnungsträger (7) in das Fach (2) schiebt, während der biegsame Stößel (4) um die gleiche Wegstrecke aus dem Fach (2) herausgezogen wird.

11. Plattenspieler nach Anspruch 2, 3, 4, 5, 6, 7, 8, 9 oder 10, **dadurch gekennzeichnet**, daß der biegsame Stößel (4) als Bowdenzug ausgeführt ist.

12. Plattenspieler nach Anspruch 2, 3, 4, 5, 6, 7, 8, 9 oder 10, **dadurch gekennzeichnet**, daß der biegsame Stößel (4) als biegsame Welle ausgeführt ist.

13. Plattenspieler nach Anspruch 7, 8, 9, 10, 11 oder 12, **dadurch gekennzeichnet**, daß das Zahnrad (10) über ein Schneckengetriebe bestehend aus einer Schnecke (8) und ein    em auf der Welle des Zahnrads (10) sitzenden Schneckenrad (9) mittels eines Elektromotors (6) angetrieben wird.

## Revendications

1. Lecteur de disques comprenant un magasin (11), composé de plusieurs compartiments (2) pour la réception de supports d'enregistrement discoïdes (7), et un mécanisme d'entraînement (1), le magasin et le mécanisme d'entraînement étant animés d'un mouvement relatif l'un par rapport à l'autre pour amener le support d'enregistrement discoïde à prélever en position de prélèvement, caractérisé en ce que le support d'enregistrement (7) peut être poussé hors du compartiment (2) au moyen d'un poussoir (4) pour lequel une ouverture (15) est prévue dans la face arrière de chacun des compartiments (2) du magasin (11).

2. Lecteur de disques selon la revendication 1, caractérisé en ce que le poussoir (4) est réalisé en un matériau flexible, que le poussoir flexible (4) est guidé depuis la face arrière du magasin (11) le long de l'un des côtés latéraux du magasin (11) vers l'avant, vers une motorisation (6, 8, 9, 10), que pour le prélèvement d'un support d'enregistrement discoïde (7) du magasin (11), le poussoir flexible (4) est introduit dans le compartiment (2) à travers l'ouverture (15) au moyen de la motorisation (6, 8, 9, 10) et que le support d'enregistrement discoïde (7) est ainsi poussé hors du compartiment (2).

3. Lecteur de disques selon la revendication 2, caractérisé en ce que le poussoir flexible (4), la motorisation (6, 8, 9, 10) et le mécanisme d'entraînement (1) forment un ensemble mécanique déplaçable par rapport au magasin.

4. Lecteur de disques selon la revendication 2 ou 3, caractérisé en ce que le poussoir flexible (4) est guidé dans un tube de guidage (3) au moins dans les courbes.

5. Lecteur de disques selon la revendication 2, 3 ou 4, caractérisé en ce que le poussoir flexible (4) penètre perpendiculairement dans l'ouverture (15) dans la paroi arrière du magasin (11).

6. Lecteur de disques selon la revendication 2, 3, 4 ou 5, caractérisé en ce que l'ouverture (15) pour le poussoir flexible (4) se trouve au milieu de la paroi arrière de chacun des compartiments (2).

7. Lecteur de disques selon la revendication 2, 3, 4, 5 ou 6, caractérisé en ce que l'extrémité du poussoir flexible (4) qui ne peut pas être introduite dans l'ouverture (15) est munie d'une crémaillère (14) engrenant avec un pignon (10).

8. Lecteur de disques selon la revendication 1, 2, 3, 4, 5, 6 ou 7, caractérisé en ce qu'il est prévu une crémaillère (12) avec un bras de levier à angles droits (13) parallèle à la face avant du magasin (11), sur laquelle engrène un pignon (10), et qu'un support d'enregistrement discoïde (7) prélevé du magasin (11) pour lecture, peut être repoussé dans le magasin (11) au moyen du bras de levier (13).

9. Lecteur de disques selon la revendication 8, caractérisé en ce que la crémaillère (12) avec le bras de levier à angles droits (13) et le mécanisme d'entraînement (1) forment un ensemble mécanique.

10. Lecteur de disques selon la revendication 3 et 9, caractérisé en ce que la crémaillère (12) avec le bras de levier à angles droits (13) attaque le pignon (10) du côté opposé à la crémaillère (14) du poussoir flexible (4) de ce pignon (10), que le poussoir flexible (4) et la crémaillère (12) concourent de telle façon que, pour pousser un support d'enregistrement discoïde (7) hors du compartiment (2) par la rotation du pignon (10) dans un sens, le poussoir flexible (4) est introduit dans le compartiment (2) à travers l'ouverture (15), tandis que le bras de levier à angles droits (13) est simultanément éloigné de la face avant du magasin (11) d'une course de même valeur, que pour introduire un support d'enregistrement discoïde (7) dans le compartiment (2) par la rotation du pignon (10) dans le sens contraire, le bras de levier à angles droits (13) pousse le support d'enregistrement discoïde (7) dans le compartiment (2), tandis que le poussoir flexible (4) est retiré du compartiment (2) d'une course de même valeur.

11. Lecteur de disques selon la revendication 2, 3, 4, 5, 6, 7, 8, 9 ou 10, caractérisé en ce que le poussoir flexible (4) est réalise sous forme d'un câble Bowden.

12. Lecteur de disques selon la revendication 2, 3, 4, 5, 6, 7, 8, 9 ou 10, caractérisé en ce que le poussoir flexible (4) est réalise sous forme d'un arbre flexible.

13. Lecteur de disques selon la revendication 7, 8, 9, 10, 11 ou 12, caractérisé en ce que le pignon (10) est entraîné au moyen d'un moteur électrique (6) par l'intermédiaire d'un engrenage à vis sans fin, composé d'une vis sans fin (8) et d'une roue tangente (9), montée sur l'arbre du pignon (10).

## Claims

1. Disc player with a magazine (11) consisting of several drawers (2) for accomodating disc-shaped recording carriers (7) and with a drive mechanism (1), in which the magazine and the drive mechanism, in order that the disc-ßshaped recording carrier to be removed may be positioned in the removal position, are displaceable relative to one another, characerised in that the disc-shaped recording carriers (7) can be pushed out of the drawer (2) by means of a ram (4), for which an opening (15) is provided in the rear wall of each drawer (2) of the magazine (11).

2. Disc player according to claim 1, characterised in that the ram (4) is made of flexible material, that the flexible ram (4) runs from the rear wall of the magazine (11) along one side of the magazine (11) forward to a drive (6, 8, 9, 10), that for the removal of a disc-shaped recording carrier (7) out of the magazine (11) the flexible ram (4) is pushed by means of the drive (6, 8, 9, 10) through the opening (15) into the drawer (2) and the disc-shaped recording carrier (7) is thereby pushed out of the drawer (2).

3. Disc player according to claim 2, characterised in that the flexible ram (4), the drive (6, 8, 9, 10) and the drive mechanism (1) form a mechanical unit which is displaceable relative to the magazine.

4. Disc player according to claim 2 or 3, characterised in that the flexible ram (4) runs at least along the curves in a guide tube (3).

5. Disc player according to claim 2, 3 or 4, characterised in that the flexible ram (4) enters perpendicularly into the opening (15) in the rear wall of the magazine (11).

6. Disc player according to claim 2, 3, 4 or 5, characterised in that the opening (15) for the flexible ram (4) lies in the middle of the rear wall of each drawer (2).

7. Disc player according to claim 2, 3, 4, 5 or 6, characterised in that the end of the flexible ram (4) not insertable into the opening (15) is provided with a toothed rod (14) with which a toothed wheel (10) engages.

8. Disc player according to claim 1, 2, 3, 4, 5, 6 or 7, characterised in that a toothed rod (12) with a rectangular lever arm (13) running parallel with the front side of the magazine (11) is provided, with which a toothed wheel (10) engages, and that a disc-shaped recording carrier (7) removed from the magazine (11) for playback can be pushed back into the magazine (11) by means of the lever arm (13).

9. Disc player acccording to claim 8, characterised in that the toothed rod (12) forms a mechanical unit with the rectangular lever arm (13) and the drive mechanism (11).

10. Disc player according to claims 3 and 9, characterised in that the toothed rod (12) with the rectangular lever arm (13) engages with the toothed wheel (10) on the side of this toothed wheel (10) lying opposite the toothed rod (14) of the flexible ram (4), that the flexible ram (4) and the toothed rod (12) interact with the rectangular lever arm (13) in such a way that, for the ejection of a disc-shaped recording carrier (7) out of the drawer (2) by rotation of the toothed wheel (10) in the one direction, the flexible ram (4) is pushed into the drawer (2) through the opening (15), while at the same time the rectangular lever arm (13) is moved away from the front side of the magazine (11) by the same distance, that for the insertion of a disc-shaped recording carrier (7) into the drawer (2) by rotation of the toothed wheel (10) in the other direction the rectangular lever arm (13) pushes the disc-shaped recording carrier (7) into the drawer (2), while the flexible ram (4) is withdrawn out of the drawer (2) by the same distance.

11. Disc player according to claim 2, 3, 4, 5, 6, 7, 8, 9 or 10, characterised in that the flexible ram (4) is designed as a Bowden cable.

12. Disc player according to claim 2, 3, 4, 5, 6, 7, 8, 9 or 10, characterised in that the flexible ram (4) is designed as a flexible shaft.

13. Disc player according to claim 7, 8, 9, 10, 11 or 12, characterised in that the toothed wheel (10) is dirven by means of an electric motor (6) via a worm gear consisting of a worm (8) and a worm wheel (9) sitting on the shaft of the toothed wheel (10).

Fig. 1

Fig. 2

Fig. 3

Fig. 4

EP 0 267 538 B1

Fig. 5